# DEMANDE DE BREVET EUROPEEN

(11) **EP 0 701 932 A1**
(43) Date de publication de la demande: **20.03.1996**
(21) Numéro de dépôt: 95114376.7
(22) Date de dépôt: 13.09.1995
(51) Int. Cl.: B60R 25/02

(54) **Antivol de direction de véhicule automobile du type à débrayage du volant**

(30) Priorité: 15.09.1994 FR 9411117
(71) Demandeur: ANTIVOLS SIMPLEX, F-21059 Dijon Cédex (FR)
(72) Inventeur: Jouffroy, Michel, F-21100 Fauvernay (FR)
(74) Mandataire: Lemaire, Marc

(57) **Abrégé**

Antivol (12) de direction de véhicule automobile comportant des moyens débrayables, commandés par un verrou (92), d'accouplement en rotation entre un arbre de volant (20) et un arbre coaxial de crémaillère (22). Il comporte une bague (48) d'accouplement liée en rotation à l'arbre de crémaillère (22) et montée coulissante axialement sur ce dernier et des moyens (90) de blocage axial de la bague d'accouplement (48) en position débrayée comportant un pêne (90) de blocage, et des moyens (72) de commande des déplacements de la bague d'accouplement (48) par coopération du pêne de blocage (90) avec un profil de came (72) formé sur la bague d'accouplement (48).

## Description

La présente invention concerne un antivol de direction de véhicule automobile.

L'invention concerne plus particulièrement un antivol de direction du type comportant des moyens débrayables, commandés par un verrou, d'accouplement en rotation entre un arbre de volant et un arbre coaxial de crémaillère.

Un tel antivol de direction, au lieu de bloquer en rotation l'arbre de crémaillère appartenant à la colonne de direction, a pour principe de rendre fou en rotation le volant lorsque l'antivol est en position verrouillée.

Ainsi, la conduite du véhicule est rendue impossible car le volant de direction ne permet plus d'appliquer aucun couple à l'arbre de crémaillère et ne permet donc plus de provoquer un pivotement des roues.

L'invention a pour but de proposer un antivol de direction du type mentionné précédemment qui s'intègre de manière particulièrement simple dans une colonne classique de direction et qui présente une grande sécurité de fonctionnement lorsqu'il n'est pas verrouillé, c'est-à-dire qu'il permet une conduite normale du véhicule en toute sécurité sans présenter aucun risque de débrayage accidentel en l'absence de toute action positive sur le verrou de l'antivol.

Dans ce but, l'invention propose un antivol de direction comportant une bague d'accouplement liée en rotation à l'arbre de crémaillère et montée coulissante axialement sur ce dernier entre une position embrayée vers laquelle elle est rappelée élastiquement et dans laquelle elle est liée en rotation à l'arbre de volant, et une position débrayée dans laquelle l'arbre de volant est libre de tourner par rapport à la bague d'accouplement, des moyens de blocage axial de la bague d'accouplement en position débrayée comportant un pêne de blocage de la bague d'accouplement dont les déplacements sont commandés par le verrou, et des moyens de commande du déplacement de la bague d'accouplement de sa position embrayée vers sa position débrayée par coopération du pêne de blocage avec un profil de came formé sur la bague d'accouplement, lorsque le pêne de blocage est en position verrouillée et lorsqu'on applique un couple à l'arbre de volant, et comportant un boîtier dans lequel les arbres de volant et de crémaillère sont montés tournants et à l'intérieur duquel le pêne de blocage est susceptible de faire saillie radialement pour occuper sa position verrouillée dans laquelle il est reçu dans une rainure périphérique de la bague d'accouplement qui délimite ledit profil de came, caractérisé en ce que, en développée, le profil de came comporte successivement un premier tronçon rectiligne qui est adjacent à un bord de commande du pêne de blocage lorsque la bague d'accouplement est en position embrayée, une première rampe inclinée de commande du déplacement de la bague d'accouplement avec lequel coopère le bord de commande du pêne de blocage lorsque ce dernier est en position verrouillée et pour un premier sens de rotation du volant, un second tronçon rectiligne qui est adjacent au bord de commande du pêne de blocage lorsque ce dernier est en position verrouillée, et une seconde rampe inclinée de commande des déplacements de la bague d'accouplement pour un second sens de rotation du volant.

Selon d'autres caractéristiques de l'invention :
- la rainure de la bague d'accouplement comporte, en développée, un bord rectiligne continu et un bord opposé dans lequel est formé le profil de came, la distance axiale séparant le bord rectiligne du second troncon rectiligne du profil de came étant sensiblement égale à la largeur du pêne de blocage ;
- le profil de came comporte, agencées successivement et réparties régulièrement, trois parties comportant chacune un premier troncon rectiligne, une première rampe, un second tronçon rectiligne et une seconde rampe;
- l'antivol comporte un doigt d'immobilisation en rotation de la bague d'accouplement lorsque cette dernière est en position débrayée ;
- le doigt d'immobilisation en rotation est monté coulissant radialement dans le boîtier et est sollicité axialement vers une position active dans laquelle il fait saillie à l'intérieur d'une encoche d'immobilisation formée sur la bague d'accouplement ;
- l'encoche est une encoche axiale débouchante à l'une de ses extrémités et dont la largeur transversale est sensiblement égale au diamètre du doigt d'immobilisation en rotation ;
- l'encoche est alignée axialement avec d'un second tronçon rectiligne du profil de came ;
- la bague d'accouplement comporte trois encoches axiales réparties angulairement de manière régulière dont chacune est alignée axialement avec un des trois seconds tronçons rectilignes du profil de came ;
- le bord libre d'extrémité axiale de la bague d'accouplement tourné vers l'arbre de crémaillère comporte un chanfrein qui coopère avec le doigt d'immobilisation en rotation pour provoquer l'effacement de ce dernier à l'encontre de moyens élastiques qui le sollicitent ;
- en position embrayée, la bague d'accouplement est liée en rotation à l'arbre de volant par coopération de formes complémentaires agencées aux extrémités axiales en vis-à-vis de la bague d'accouplement et de l'arbre de volant qui sont en prise en position embrayée et qui sont éloignées axialement les unes des autres en position débrayée de la bague d'accouplement ;
- les formes complémentaires comportent des moyens de détrompage qui n'autorisent qu'une seule position angulaire relative d'accouplement entre l'arbre de volant et à la bague d'accouplement ;
- l'antivol comporte un organe de retenue du pêne en position verrouillée, et donc de blocage de la bague d'accouplement en position débrayée, lorsque la position angulaire de l'arbre de volant par rapport à la bague d'accouplement est différente de ladite seule position angulaire ;
- l'organe de retenue est monté coulissant parallèlement à l'axe de coulissement de la bague d'accouplement et il est susceptible de coulisser entre une position de retenue dans laquelle son extrémité est engagée dans un cran de retenue formé dans le pêne de blocage et vers laquelle il est sollicité élastiquement et une position dégagée dans laquelle son extrémité est située en retrait du cran de retenue, le déplacement axial de l'organe de retenue étant commandé par la rotation de l'arbre de volant ;
- l'organe de retenue est une douille coulissante fixe en rotation par rapport à la bague d'accouplement comportant un collet radial agencé en regard d'un épaulement radial de l'arbre de volant, des moyens à came et à élément suiveur de came étant agencés entre le collet et l'épaulement radial pour commander le déplacement axial de la douille de retenue.

D'autres caractéristiques et avantages de l'invention apparaîtront à la lecture de la description détaillée qui va suivre pour la compréhension de laquelle on se reportera aux dessins annexés dans lesquels :
- La figure 1 est une vue éclatée en perspective des principaux composants d'un antivol de direction réalisé conformément aux enseignements de l'invention et qui sont contenus dans un boîtier de l'antivol ;
- la figure 2 est une vue en section passant par l'axe commun à l'arbre de volant et à l'arbre de crémaillère et passant par l'axe du pêne de blocage, qui illustre l'antivol de direction en position déverrouillée et en position embrayée de la bague d'accouplement ;
- la figure 3 est une vue similaire à celle de la figure 2 qui illustre l'antivol en position verrouillée et en position débrayée de la bague d'accouplement ;
- la figure 4 est une vue similaire à celle de la figure 3 sur laquelle la douille de retenue est illustrée en position engagée de retenue du pêne de blocage ;
- la figure 5 est une vue latérale en élévation de la bague d'accouplement ;
- la figure 6 est une vue en section selon la ligne 6-6 de la figure 5 ;
- la figure 7 est une vue latérale de droite de la figure 5 ;
- la figure 8 est une vue latérale de gauche de la figure 5 ;
- la figure 9 est une vue de détail illustrée en perspective et à plus grande échelle, avec arrachements partiels, d'une partie de l'arbre de volant et de la douille de retenue ; et
- la figure 10 schématique illustre une vue développée de la bague d'accouplement.

L'antivol 12 comporte un boîtier cylindrique tubulaire 14 dont chacune des extrémités opposées comporte un couvercle 16, 18 percé en son centre pour permettre le passage d'un arbre de volant 20 et d'un arbre 22 de crémaillère de direction de véhicule automobile.

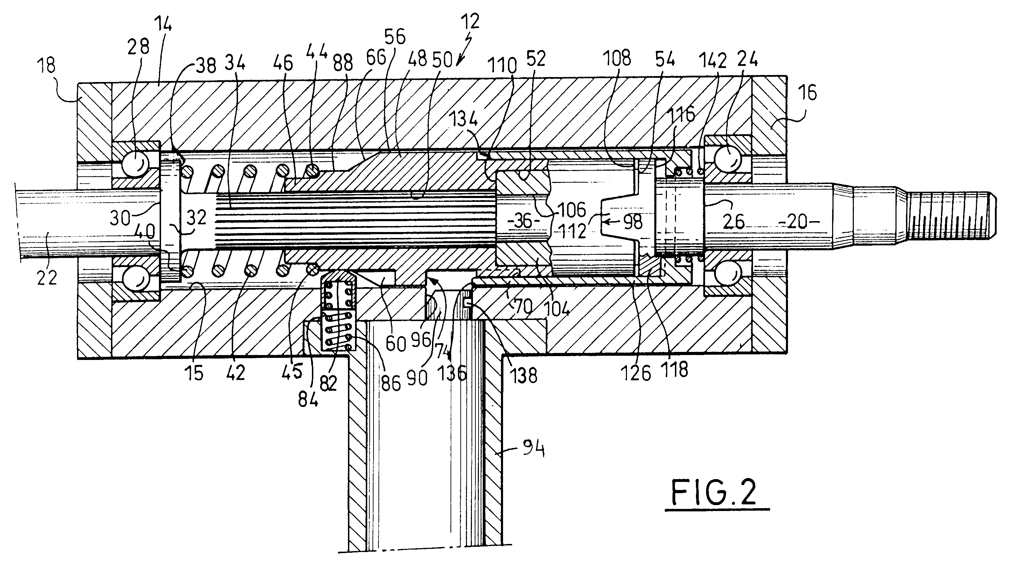

L'arbre de volant 20 est monté à rotation dans un alésage 15 du boîtier 14 par l'intermédiaire d'un roulement à billes 24 et il comporte un épaulement radial 26 qui prend appui axialement contre la bague intérieure du roulement 24 pour déterminer une position axiale en butée, vers la droite en considérant la figure 2, de l'arbre de volant 20 par rapport au boîtier 14.

De la même manière, l'arbre de crémaillère 22 est monté à rotation par l'intermédiaire d'un roulement à billes 28 et il comporte un épaulement radial 30 qui prend appui axialement contre la bague intérieure du roulement 28.

L'arbre de volant 20 et l'arbre de crémaillère 22 sont ainsi tous les deux montés à rotation coaxialement dans le boîtier 14.

L'épaulement d'appui 30 de l'arbre de crémaillère 22 est formé sur un collet 32 et l'arbre de crémaillère 22 se prolonge axialement à l'intérieur du boîtier 14 par un tronçon cannelé 34 puis par un tronçon cylindrique lisse d'extrémité 36.

Le collet radial 32 délimite également un second épaulement radial 38 qui sert de surface d'appui à une première extrémité 40 d'un ressort hélicoïdal de compression 42 agencé autour du tronçon cannelé 34 et dont la seconde extrémité 44 prend appui contre une surface annulaire d'appui 45 formée à l'extrémité axiale 46 d'une bague d'accouplement 48.

La bague d'accouplement 48 présente une forme générale tubulaire cylindrique creuse.

Elle comporte un perçage axial cannelé 50 qui permet de lier la bague d'accouplement 48 en rotation à l'arbre de crémaillère 22 et qui permet à la bague d'accouplement 48 de coulisser axialement le long du tronçon cannelé 34.

L'alésage cannelé 50 s'étend depuis l'extrémité 46 jusqu'à l'intérieur d'une chambre annulaire cylindrique lisse 52 qui débouche axialement à l'extrémité 54 de la bague d'accouplement tournée vers l'arbre de volant 20.

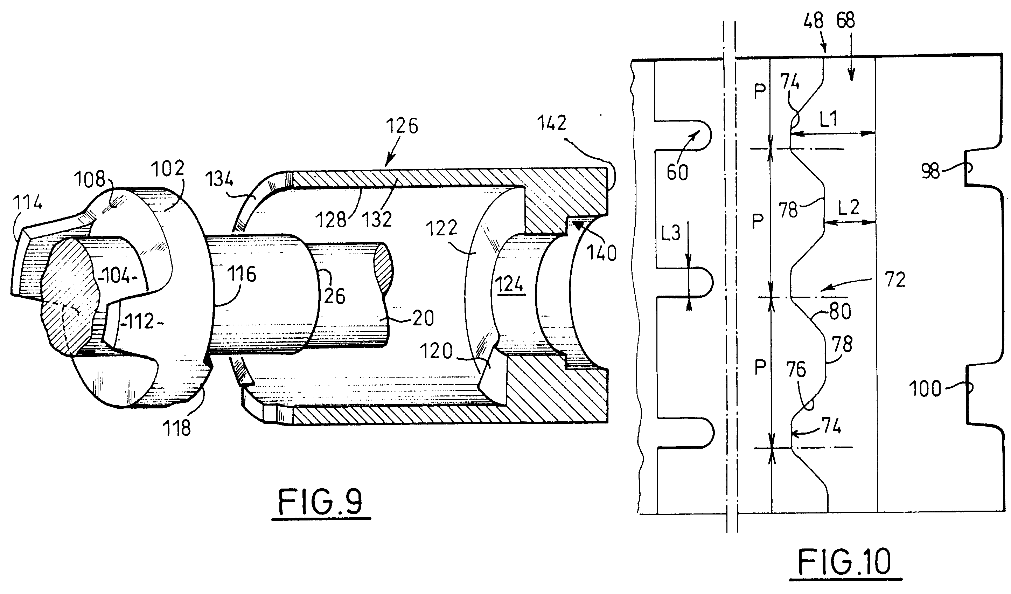

La surface cylindrique périphérique 56 de la bague d'accouplement 48 comporte trois encoches 60 qui sont réparties angulairement de manière régulière autour de l'axe de la bague, comme on peut le voir sur la figure 8.

Chacune des encoches 60 est une encoche axiale à bords parallèles à l'axe de la douille, dont l'extrémité 62 tournée vers l'arbre de volant 20 est borgne et dont l'extrémité 64 tournée vers l'arbre de crémaillère 22 est ouverte.

La bague d'accouplement 48 comporte un chanfrein 66 qui est agencé axialement au voisinage des extrémités débouchantes 64 des encoches axiales 60.

Au-delà de la portion de surface périphérique cylindrique 56 du corps de la douille de blocage 48, celle-ci comporte une rainure ou gorge radiale 68.

La rainure 68 est délimitée par un bord rectiligne 70 qui s'étend dans un plan radial perpendiculaire à l'axe de la bague d'accouplement 48 et par un bord opposé qui délimite un profil de came 72.

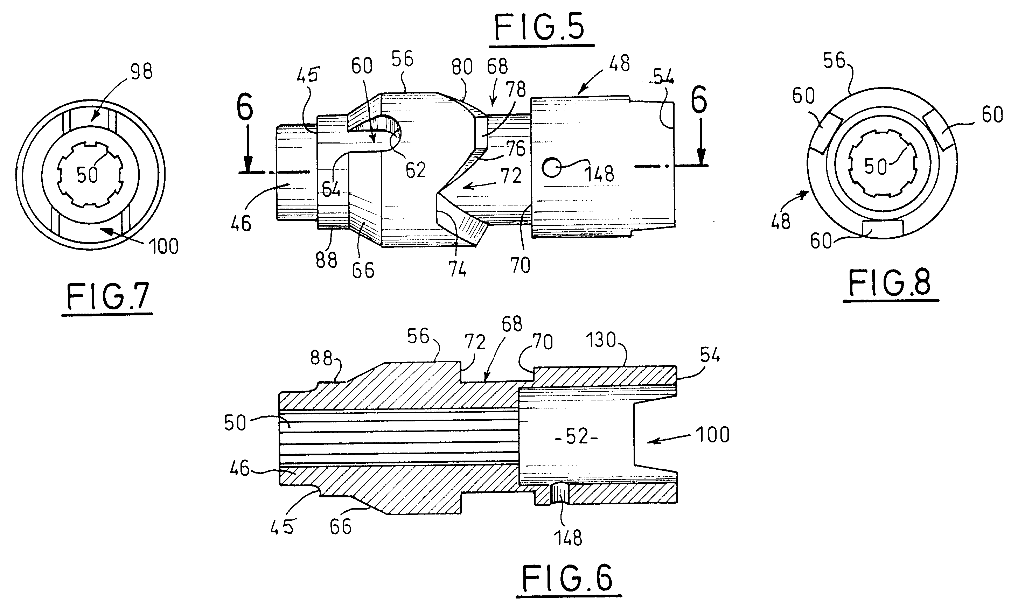

Comme on peut le voir sur la figure 5, et comme cela est illustré plus en détail sur la vue schématique développée de la figure 10, le profil de la came 72 est un profil régulier qui comporte trois parties successives et identiques P. Chacune de ces parties P du profil de came 72 comporte un premier tronçon rectiligne 74 parallèle au bord 70, une première rampe inclinée 76, un second tronçon rectiligne 78 et une seconde rampe inclinée 80.

Le premier tronçon 74 délimite une largeur axiale L1 de la rainure 68 tandis que le second tronçon rectiligne 78 délimite une largeur axiale L2 de la rainure 68, inférieure à L1.

Comme on peut le voir sur les figures 5 et 10, chaque premier tronçon 74 s'étend angulairement sensiblement sur la même longueur que la largeur L3 d'une encoche 60 et chaque premier tronçon rectiligne 74 est aligné axialement avec une encoche associée 60.

La largeur L3 de chaque encoche est également dimensionnée de manière à permettre l'introduction dans l'une ou l'autre des encoches 60 d'un doigt 82 d'immobilisation en rotation de la bague d'accouplement 48.

Le doigt 82 est un doigt cylindrique qui est monté coulissant radialement dans un perçage 84 formé dans le corps annulaire du boîtier 14 de l'antivol 12 et il est sollicité élastiquement en permanence par un ressort hélicoïdal de compression 86, radialement vers l'intérieur du boîtier 14, en direction d'une portion de surface cylindrique 88 de la bague d'accouplement 68 qui constitue également le fond radial des encoches 60.

La largeur axiale L2 de la rainure de commande 68, dans la zone de chaque tronçon rectiligne 78 est légèrement supérieure au diamètre d'un pêne de blocage 90 qui appartient à un verrou 92 dont le corps est schématisé sur les figures.

Le corps du verrou 92 est monté dans un manchon radial 94 rapporté sur le boîtier 14.

Le pêne de blocage 90 est susceptible de se déplacer, sous l'action du verrou 92 selon une direction radiale par rapport à l'axe du boîtier 14 à travers un perçage 96 formé dans la paroi du boîtier 14 et qui débouche à l'intérieur de ce dernier pour pénétrer dans la rainure 68.

Le bord d'extrémité axial 54 de la bague d'accouplement 48 comporte deux crans diamétralement opposés 98 et 100 de dimensions différentes comme on peut le voir notamment sur la figure 7.

L'arbre de volant 20 se prolonge axialement, au-delà de l'épaulement d'appui 26 par un collet radial extérieur 102 puis par une paroi annulaire cylindrique 104 qui est reçue en coulissement dans la chambre 52 de la bague d'accouplement 48 et dont le perçage intérieur 106 reçoit en coulissement le tronçon cylindrique d'extrémité 36 de l'arbre de crémaillère 22.

Le collet radial 102 délimite un épaulement radial annulaire plan 108 à partir duquel font saillie axialement, en direction du bord d'extrémité 110 de l'arbre de volant 20 tourné vers l'arbre de crémaillère 22, deux ergots 112 et 114 dont les formes sont complémentaires de celles des crans 98 et 100 afin de pouvoir être reçus axialement dans ces derniers en position embrayée de l'antivol 12 et comme cela est illustré sur la figure 2.

Le collet radial extérieur 102 délimite un second épaulement radial plan 116 à partir duquel fait saillie axialement, en direction du roulement 24, un prolongement 118 qui est prévu pour coopérer avec un profil de came 120 formé sur la face radiale en vis-à-vis 122 d'un collet radial interne 124 d'une douille 126 de retenue du pêne de blocage 90.

La douille de retenue 126 est une pièce de forme générale annulaire cylindrique qui délimite une chambre cylindrique interne 128 qui reçoit en coulissement le collet radial extérieur 102 de l'arbre de volant 20 et la portion de paroi cylindrique 130 de la douille de blocage 68 qui entoure la chambre 52.

La paroi annulaire 132 de la douille de retenue 126 est délimitée axialement par le collet radial interne 124 et par un bord annulaire d'extrémité 134 à partir duquel fait saillie axialement un bec de retenue 136.

Le bec de retenue 136 est susceptible de pénétrer dans un cran de retenue 138 formé dans le pêne de blocage 90.

Un logement 140 est formé dans la face annulaire d'extrémité 142 de la douille de retenue 126 pour recevoir un ressort hélicoïdal de compression 142 qui prend appui contre la bague intérieure du roulement 24 pour solliciter axialement en permanence la douille de retenue 126 en direction du pêne de blocage 90.

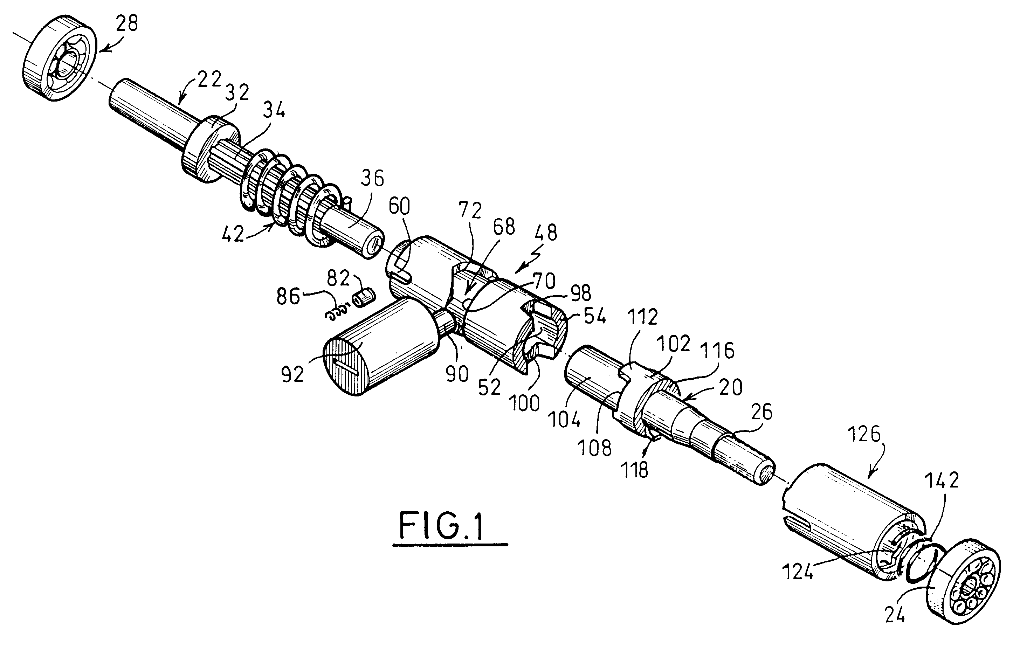

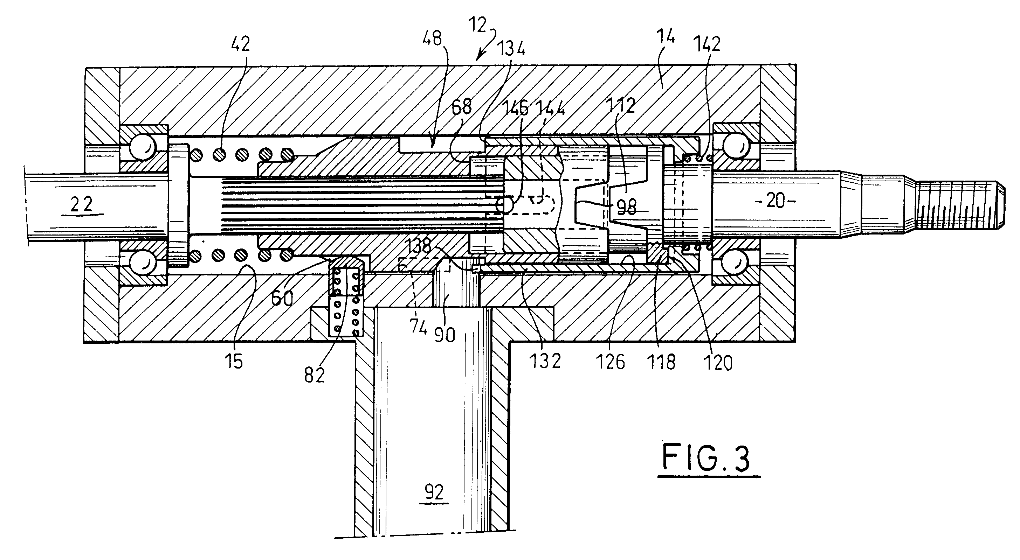

Comme on peut le voir aux figures 1 et 3, la paroi annulaire 132 de la douille de retenue 126, comporte une rainure axiale 144 qui reçoit une goupille 146 montée dans un trou 148 de la bague d'accouplement 48 de manière à immobiliser la douille de retenue 126 en rotation par rapport à la bague d'accouplement 48.

On décrira maintenant le mode de fonctionnement de l'antivol en se référant notamment aux figures 2 à 4 et à la figure 10.

L'antivol 12 est illustré sur la figure 2 en position embrayée, c'est-à-dire dans la position normale d'utilisation de la direction du véhicule permettant l'entraînement en rotation de l'arbre de crémaillère 22 par l'arbre de volant 20.

La bague d'accouplement 48 est sollicitée axialement par le ressort 42, de la gauche vers la droite en considérant la figure 2, vers sa position embrayée dans laquelle les crans 98 et 100 reçoivent les ergots de formes complémentaires 112 et 114 et dans laquelle la bague d'accouplement 48 prend appui axialement contre le bord annulaire d'extrémité 110 de l'arbre de volant 20.

Dans cette position embrayée, le doigt d'immobilisation en rotation 82 s'étend en regard de la portion de surface annulaire 88 de la bague d'accouplement 48 et il n'est pas reçu dans une encoche 60.

Le pêne de blocage 90 est en retrait par rapport à la paroi de l'alésage interne 15 du boîtier 14 et il ne coopère en aucune manière avec le profil de came 72.

Toute rotation de l'arbre de volant 20 provoque l'entraînement en rotation de l'arbre de crémaillère 12 du fait de la coopération des ergots 112, 114 avec les crans 98, 100 et du fait de la liaison en rotation de la bague d'accouplement 48 avec l'arbre de crémaillère 22.

Dans la position embrayée illustrée sur la figure 2, les parties 118 et 120 des collets 102 et 122 sont en regard l'une de l'autre et la douille de retenue 126 est ainsi en position de retrait axial, vers la droite en considérant la figure 2, de manière que le bec de retenue 136 soit situé sensiblement au droit du bord du perçage 96.

Lorsque l'utilisateur désire mettre en oeuvre l'antivol 12 afin de rendre le volant de direction fou en rotation pour empêcher tout actionnement de la direction du véhicule, il agit sur le verrou 92 de manière à provoquer la pénétration du pêne de blocage 90 à l'intérieur de l'alésage 15 et dans la rainure de commande 68.

Au moment où le conducteur actionne le verrou 92, le pêne de blocage 90 peut se trouver en regard d'une portion pleine de la paroi périphérique cylindrique 56, ou pénétrer directement dans la rainure 68 au niveau d'un premier tronçon rectiligne 74 du profil de came 72.

Le conducteur entraîne ensuite en rotation l'arbre de volant 20 au moyen du volant du véhicule ce qui a pour effet de provoquer la pénétration du pêne 90 à l'intérieur de la rainure 68, si ceci n'était pas encore le cas, puis de provoquer une coopération du bord du pêne de blocage 90 avec le profil de came 72.

Le pêne de blocage se trouve initialement en regard de l'un des premiers tronçons rectilignes 74 puis il coopère, selon le sens de rotation, avec une rampe inclinée 76 ou une rampe inclinée 80.

Cette coopération provoque un déplacement axial, de la droite vers la gauche en considérant les figures 2 et 3, de la bague d'accouplement 48 depuis sa position embrayée illustrée sur la figure 2 jusqu'à sa position embrayée illustrée sur la figure 3.

Dans la position débrayée, le bord du pêne de blocage 90 est en regard d'un second tronçon rectiligne 78 du profil de came et les ergots 112, 114 ne sont plus en prise dans les crans 98, 100, et la bague d'accouplement est donc une position dans laquelle l'arbre de volant 20 est libre de tourner dans le boîtier 14 sans entraîner en rotation la bague d'accouplement 48, et donc sans entraîner en rotation l'arbre de crémaillère 22.

Lors du déplacement axial de la bague d'accouplement 48 de la droite vers la gauche, et du fait de l'alignement des encoches 60 avec les seconds tronçons rectilignes 78, le doigt 82 a pénétré dans une encoche axiale 60 et le doigt 82 immobilise ainsi en rotation la bague d'accouplement 48 par rapport au boîtier 12.

Du fait de cette immobilisation en rotation, et du fait de la liaison en rotation de la bague d'accouplement 48 avec l'arbre de crémaillère 22, il est également impossible à un voleur de provoquer une quelconque rotation de l'arbre de crémaillère 42 par rapport au boîtier 14, même par un moyen agissant directement sur l'arbre de crémaillère 22.

Dans la position débrayée illustrée sur la figure 3, l'arbre de volant 20 est illustré dans la seule position angulaire qu'il est susceptible d'occuper par rapport à la bague d'accouplement 48 et dans laquelle, en cas de libération de cette dernière, les ergots 112, 114 pourraient à nouveau pénétrer dans les crans 98, 100. En effet, du fait des dimensions différentes des deux ergots et des deux crans, tout autre accouplement en rotation entre l'arbre de volant 20 et la bague d'accouplement 48 est impossible en dehors de cette seule position angulaire.

Dans cette position angulaire, la douille de retenue 126 est également en position de retrait, c'est-à-dire que son bec de retenue 136 n'est pas reçu dans le cran de retenue 138 du pêne de blocage qui s'étend néanmoins en regard du bec de retenue 136.

On notera également que la bague d'accouplement 48 est en permanence sollicitée élastiquement, de la gauche vers la droite en considérant la figure 3, par le ressort 42.

On conçoit que si le conducteur agit à nouveau sur le verrou 92 pour provoquer la rentrée du pêne de blocage 90, c'est-à-dire la sortie de ce dernier hors de la rainure de commande 68 et en retrait par rapport à la paroi de l'alésage 15, l'action du ressort 42 provoquera immédiatement le déplacement axial de la gauche vers la droite de la bague d'accouplement 48 jusqu'à ce que celle-ci occupe à nouveau sa position embrayée illustrée sur la figure 2.

Comme cela a été expliqué précédemment, ce retour complet vers la position embrayée pour assurer à nouveau la liaison en rotation entre l'arbre de volant 20 et la bague d'accouplement 48 n'est possible que dans la seule position angulaire relative entre ces deux derniers éléments qui est illustrée sur la figure 3.

Il est donc souhaitable d'éviter que la bague d'accouplement 48 puisse retourner élastiquement vers sa position embrayée, en cas de rentrée du pêne 90, tant que la seule position angulaire d'accouplement en rotation n'est pas atteinte.

Ce résultat est obtenu grâce à la douille de retenue 126 qui, dès que l'arbre de direction 20 tourne par rapport à la bague d'accouplement 48, se déplace axialement de la droite vers la gauche, du fait de l'éloignement angulaire des parties 118 et 120 et sous l'action du ressort hélicoïdal de compression 142.

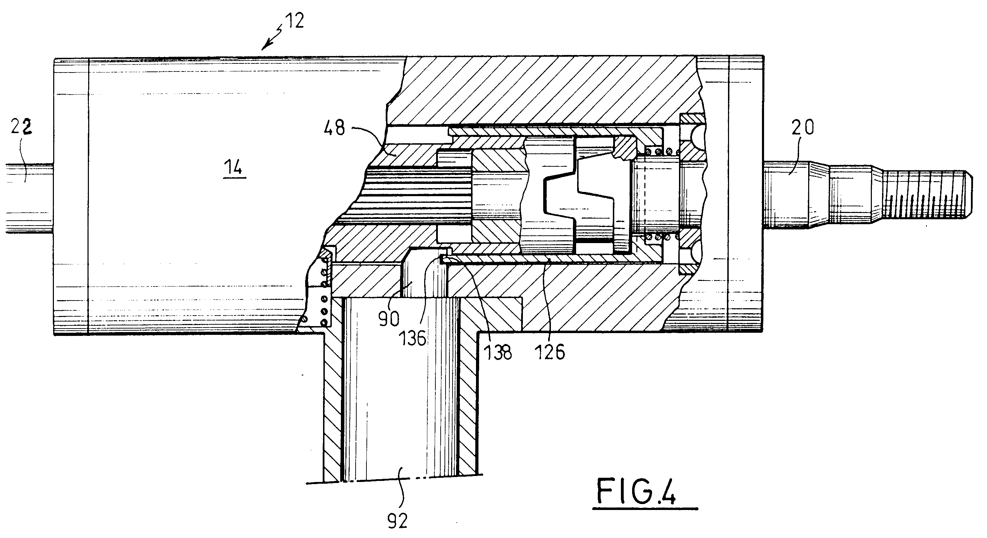

Cette position est illustrée sur la figure 4 dans laquelle on voit que le bec de retenue 136 de la douille de retenue 126 a pénétré dans le cran de retenue 138 du pêne de blocage 90 empêchant tout retrait de ce dernier sous l'action du verrou 92.

Ainsi, lorsque le conducteur désire provoquer la libération de la bague d'accouplement 48 en vue d'utiliser à nouveau normalement sa direction de son véhicule, il agit sur le verrou 92 et il provoque simultanément une rotation de l'arbre de volant 20 jusqu'à ce que la seule position angulaire relative d'accouplement illustrée sur la figure 3 soit atteinte, position dans laquelle le bec de retenue 136 sort du cran de retenue 138 et permet la rentrée du pêne de blocage 90, les composants occupant alors à nouveau leurs positions relatives illustrées sur la figure 2.

Dès que la bague d'accouplement retrouve sa position axiale débrayée illustrée sur la figure 2, le doigt d'immobilisation en rotation 82 de la bague d'accouplement 48 se trouve à nouveau en regard de la portion de surface annulaire cylindrique 88 et il n'est donc plus reçu dans aucune encoche 60 libérant ainsi en rotation la bague d'accouplement 48 par rapport au boîtier 12.

## Revendications

1. Antivol (12) de direction de véhicule automobile du type comportant des moyens débrayables, commandés par un verrou (92), d'accouplement en rotation entre un arbre de volant (20) et un arbre coaxial de crémaillère (22), comportant une bague (48) d'accouplement liée en rotation à l'arbre de crémaillère (22) et montée coulissante axialement sur ce dernier (22) entre une position embrayée vers laquelle elle est rappelée élastiquement et dans laquelle elle est liée en rotation à l'arbre de volant (20), et une position débrayée dans laquelle l'arbre de volant (20) est libre de tourner par rapport à la bague d'accouplement (48), des moyens (90) de blocage axial de la bague d'accouplement (48) en position débrayée comportant un pêne (90) de blocage de la bague d'accouplement (48) dont les déplacements sont commandés par le verrou (92), et des moyens (72) de commande du déplacement axial de la bague d'accouplement (48) de sa position embrayée vers sa position débrayée par coopération du pêne de blocage (90) avec un profit de came (72) formé sur la bague d'accouplement (48), lorsque le pêne de blocage (90) est en position verrouillée et lorsque l'on applique un couple à l'arbre de volant (20) et comportant un boîtier (14) dans lequel les arbres de volant (20) et de crémaillère (22) sont montés tournants et à l'intérieur duquel le pêne de blocage (90) est susceptible de faire saillie radialement pour occuper sa position verrouillée dans laquelle il est reçu dans une rainure périphérique (68) de la bague d'accouplement (48) qui délimite ledit profit de came (72), caractérisé en ce que, en développée, le profil de came comporte successivement un premier tronçon rectiligne (74) qui est adjacent à un bord de commande du pêne de blocage (90) lorsque la bague d'accouplement (48) est en position embrayée, une première rampe inclinée (76) de commande du déplacement de la bague d'accouplement (48) avec lequel coopère le bord de commande du pêne de blocage (90) lorsque ce dernier est en position verrouillée et pour un premier sens de rotation du volant, un second tronçon rectiligne (78) qui est adjacent au bord de commande du pêne de blocage (90) lorsque ce dernier est en position verrouillée, et une seconde rampe inclinée (80) de commande des déplacements de la bague d'accouplement (48) pour un second sens de rotation du volant.

2. Antivol de direction selon la revendication 1, caractérisé en ce que la rainure (68) de la bague d'accouplement (48) comporte, en développée, un bord rectiligne continu (70) et un bord opposé dans lequel est formé le profil de came (72), et en ce que la distance axiale (L2) séparant le bord rectiligne (70) du second tronçon rectiligne (78) du profil de came est sensiblement égale au diamètre du pêne de blocage.

3. Antivol de direction selon l'une des revendications 1 ou 2, caractérisé en ce que le profil de came (72) comporte, agencées successivement et réparties régulièrement, trois parties (P) comportant chacune un premier tronçon rectiligne (74), une première rampe (76), un second tronçon rectiligne (78) et une seconde rampe (80).

4. Antivol de direction selon l'une quelconque des revendications précédentes, caractérisé en ce qu'il comporte un doigt d'immobilisation en rotation de la bague d'accouplement (48) lorsque cette dernière est en position débrayée.

5. Antivol de direction selon la revendication 4 prise en combinaison avec la revendication 1, caractérisé en ce que le doigt d'immobilisation en rotation (82) est monté coulissant radialement dans le boîtier (14) et est sollicité axialement vers une position active dans laquelle il fait saillie à l'intérieur d'une encoche (60) d'immobilisation formée sur la bague d'accouplement (48).

6. Antivol de direction selon la revendication 5, caractérisé en ce que l'encoche est une encoche axiale (60) débouchante à l'une de ses extrémités (64) et dont la largeur transversale (L3) est sensiblement égale au diamètre du doigt d'immobilisation en rotation (82).

7. Antivol de direction selon l'une des revendications 5 ou 6 prises en combinaison avec l'une quelconque des revendications 1 à 3, caractérisé en ce que l'encoche (60) est alignée axialement avec un second tronçon rectiligne du profil de came (62).

8. Antivol de direction selon la revendication 6 prise en combinaison avec la revendication 3, caractérisé en ce que la bague d'accouplement (48) comporte trois encoches axiales (60) réparties angulairement de manière régulière dont chacune est alignée axialement avec un des trois seconds tronçons rectilignes (78) du profil de came (72).

9. Antivol de direction selon l'une quelconque des revendications 5 à 8, caractérisé en ce que le bord libre d'extrémité axiale de la bague d'accouplement (48) tourné vers l'arbre de crémaillère (22) comporte un chanfrein (66) qui coopère avec le doigt d'immobilisation en rotation pour provoquer l'effacement de ce dernier (82) à l'encontre de moyens élastiques (86) qui le sollicitent.

10. Antivol de direction selon l'une quelconque des revendications précédentes, caractérisé en ce que, en position embrayée, la bague d'accouplement (48) est liée en rotation à l'arbre de volant (20) par coopération de formes complémentaires (98 - 112, 100 - 114) agencées aux extrémités axiales en vis-à-vis (54) de la bague d'accouplement (48) et (108) de l'arbre de volant (20) qui sont en prise en position embrayée et qui sont éloignées axialement les unes (98, 100) des autres (112, 114) en position débrayée de la bague d'accouplement (48).

11. Antivol de direction selon la revendication 10, caractérisé en ce que les formes complémentaires comportent des moyens de détrompage qui n'autorisent qu'une seule position angulaire relative d'accouplement entre l'arbre de volant (20) et la bague d'accouplement (48).

12. Antivol de direction selon la revendication 11, caractérisé en ce qu'il comporte un organe (126) de retenue du pêne de blocage (90) en position verrouillée, et donc de la bague d'accouplement (48) en position débrayée, lorsque la position angulaire de l'arbre de volant (20) par rapport à la bague d'accouplement (48) est différente de ladite seule position angulaire.

13. Antivol de direction selon la revendication 12, caractérisé en ce que l'organe de retenue (126) est monté coulissant parallèlement à l'axe de coulissement de la bague d'accouplement (48) et en ce qu'il est susceptible de coulisser entre une position de retenue dans laquelle son extrémité (136) est engagée dans un cran de retenue formé dans le pêne de blocage (90) et vers laquelle il est sollicité élastiquement (142) et une position dégagée dans laquelle son extrémité (136) est située en retrait du cran de retenue (138), et en ce que le déplacement axial de l'organe de retenue (126) est commandé par la rotation de l'arbre de volant (20).

14. Antivol de direction selon la revendication 13, caractérisé en ce que l'organe de retenue est une douille coulissante (126) fixe en rotation par rapport à la bague d'accouplement (48) comportant un collet radial (124) agencé en regard d'un épaulement radial (116) de l'arbre de volant (20), et en ce que des moyens (118, 120) à came et à élément suiveur de came sont agencés entre le collet (124) et l'épaulement radial (116) pour commander le déplacement axial de la douille de retenue (126) par rotation de l'arbre de volant (20).
